# EUROPEAN PATENT APPLICATION

(11) **EP 2 511 973 A1**
(43) Date of publication of application: **17.10.2012**
(21) Application number: 10835385.5
(22) Date of filing: 22.01.2010
(51) Int. Cl.: H01M 4/58, H01M 10/0525, C01B 25/45

(54) **LITHIUM IRON PHOSPHATE POSITIVE ELECTRODE ACTIVE MATERIAL MODIFIED BY GRAPHENE, PREPARATION METHOD AND LITHIUM ION SECONDARY BATTERY THEREOF**

(30) Priority: 11.12.2009 CN 200910155316
(71) Applicant: Ningbo Institute Of Material Technology And Engineering Chinese Academy of Sciences, Ningbo, Zhejiang 315201 (CN)
(72) Inventor: LIU, Zhaoping, Ningbo Zhejiang 315201 (CN); ZHOU, Xufeng, Ningbo Zhejiang 315201 (CN)
(74) Representative: Bird Goën & Co
(86) International application number: PCT/CN2010/070319
(87) International publication number: WO 2011/069348

(57) **Abstract**

The invention relates to a graphene-modified lithium iron phosphate positive electrode active material and a method for preparing the same, as well as a lithium-ion secondary cell based on this positive electrode active material. The positive electrode active material is prepared by a method in which graphene or graphene oxide and lithium iron phosphate are dispersed in an aqueous solution, agitated and ultrasonicated to mix homogeneously and for a mixture, dried to obtain a lithium iron phosphate material compounded with graphene or graphene oxide, and annealed at high temperature to obtain finally a graphene-modified lithium iron phosphate positive electrode active material. When compared with conventional modified lithium cells coated with carbon or doped with conductive polymers, the lithium-ion secondary cell based on this positive electrode active material features high cell capacity, good cycling performance of charge and discharge, long life and high cycle stability, and has great utility value.

## Description

### Technical Field

The invention relates to the technical field of energy storage materials, particularly to a novel graphene-modified lithium iron phosphate positive electrode active material with prominent rate capacity and high cycle stability, a high-performance lithium-ion secondary cell based on this material and a method for preparing the same.

### Background Art

As conventional fossil energy sources are depleting and environmental projection issue is given increasing concern, the need for a new efficient green energy source is more and more urgent. Lithium-ion cell, a strongly competitive new energy source, earns exceptional interest. In addition to its wide use in current portable mini-batteries, the development of lithium-ion cells for use in high-power, high-energy power batteries is even more promising. Electrode material is a key factor that influences the performance of lithium-ion cells. Relevant research has revealed that lithium iron phosphate material is particularly advantageous for use in lithium-ion power batteries due to its high energy density and high safety property. However, its low electric conductivity restricts the direct use of this material, and thus its performance has to be improved by modification, doping and like means. Although conventional means such as coating with carbon materials, doping of conductive polymers, blending with metallic nanoparticles and the like can enhance the electric conductivity of lithium iron phosphate positive electrode, it is increasingly urgent to develop a novel method for modifying lithium iron phosphate to further upgrade cell performance due to the growing requirements for cell performance, particularly the two high requirements of lithium-ion power batteries for energy density and power density.

Graphene is a new material rapidly emerging in recent years. Its structure may be interpreted as a single layer of graphite. Thus, it has excellent electric conductivity, and exhibits good lithium-ion conductivity too. The peculiar two-dimension lamellar nano-structure and tremendous specific surface area of graphene imparts it with more remarkable advantages over nanoparticles or nanowires and the like, when used as additive material for modification. Therefore, grapheme-modified lithium iron phosphate is expected to surpass carbon coating, conductive polymer doping and other conventional means to realize a jump of lithium-ion cell performance.

### Summary of the Invention

The first technical problem to be solved by the invention is to provide a graphene-modified lithium iron phosphate positive electrode active material.

The second technical problem to be solved by the invention is to provide a method for preparing the graphene-modified lithium iron phosphate positive electrode active material.

The third technical problem to be solved by the invention is to provide a high-performance lithium-ion secondary cell containing the graphene-modified lithium iron phosphate positive electrode active material.

The technical solution of the invention to the first technical problem mentioned above is a grapheme-modified lithium iron phosphate positive electrode active material, wherein the positive electrode active material is a lithium iron phosphate material modified by graphene, wherein the mass ratio of graphene to lithium iron phosphate is 1/30-1/10.

The technical solution of the invention to the second technical problem mentioned above is a method for preparing the graphene-modified lithium iron phosphate positive electrode active material, wherein graphene or graphene oxide and lithium iron phosphate in a particular ratio are dispersed in an aqueous solution in which the content of lithium iron phosphate is 2-50g/L; the resulting mixture is agitated for 0.5-2 hours and ultrasonicated for 0.5-2 hours to make it homogeneous; the resulting lithium iron phosphate material compounded with graphene or graphene oxide is then dried, and further subjected to high temperature annealing to obtain graphene-modified lithium iron phosphate electrode active material, wherein the mass ratio of graphene to lithium iron phosphate is 1/30-1/1,0, and that of graphene oxide to lithium iron phosphate is 1/15-1/5. Conventional ultrasonic mixing technology is used for the ultrasonication.

The graphene is prepared by solution phase chemistry, wherein graphite is oxidized by a strong oxidant, and the product is ultrasonicated to give graphene oxide which is then reduced by a strong reductant in solution phase or by high temperature annealing to obtain graphene. The specific steps include: placing the graphite in the strong oxidant and agitating under heating for 2-8 hours to obtain graphite oxide; washing with water to ph=4-5, and performing single-layer exfoliation of the graphite oxide by, such as, agitation, shaking, ultrasonication and the like to obtain graphene oxide; and reducing the graphene oxide to obtain graphene. The strong oxidant may be a mixture system of potassium permanganate, concentrated sulfuric acid and potassium nitrate (the mass ratio of the reactants is graphite : potassium permanganate : concentrated sulfuric acid : potassium nitrate =1: 2-10:20-100 :1-3), or a mixture system of fuming nitric acid and sodium chlorate (or potassium chlorate) (the mass ratio of the reactants is graphite : fuming nitric acid : sodium chlorate (or potassium chlorate) =1; 3-10:5-20), or a mixture system of fuming nitric acid, concentrated sulfuric acid and sodium chlorate (or potassium chlorate) (the mass ratio of the reactants is graphite : concentrated sulfuric acid : fuming nitric acid : sodium chlorate (or potassium chlorate) = 1: 20-50:5-20:5-20). Reduction may be fulfilled in water phase using a strong water-soluble reductant (e.g. hydrazine hydrate, sodium borohydride, etc.), wherein the mass ratio of the reductant to the graphene oxide is (1.5:1-3:1, and the reduction temperature is 70-90 °C. Reduction of the graphene oxide may also be fulfilled by a process of high temperature calcination (calcined at 400-1000 °C under the protection of argon for 2-6 hours).

The lithium iron phosphate material may be prepared by various known methods, such as solid phase process and liquid phase process (including hydrothermal process, sol-gel process, co-precipitation process and the like), etc..

Preparation by solid phase process: stoichiometric solid powder precursors containing lithium, iron and phosphor are mixed homogeneously and subjected to solid phase reaction at high temperature to obtain solid powder of lithium iron phosphate.

Preparation by liquid phase process: inorganic precursors containing lithium, iron and phosphor are dissolved in a solvent, and subjected to solution phase reaction to obtain lithium iron phosphate or lithium iron phosphate precursor, followed by high temperature annealing to obtain final lithium iron phosphate material.

The temperature for high temperature annealing is 400-700°C, and the annealing time is 2-12 hours.

The drying means is one of spray drying, vacuum suction filtration drying or direct heat drying, wherein vacuum suction filtration drying or direct heat drying has to be followed by ball milling to pulverize the product.

The technical solution of the invention to the third technical problem mentioned above is a lithium-ion secondary cell comprising a positive electrode plate, a negative electrode plate, a separator between the positive electrode plate and the negative electrode plate, and a non-aqueous electrolyte solution, wherein the positive electrode plate is composed of a layer of positive electrode active material coated on a positive current collector, wherein the positive electrode active material is grapheme-modified lithium iron phosphate material, wherein the mass ratio of graphene to lithium iron phosphate is 1/30-1/10.

The lithium-ion secondary cell is made via a conventional process route.

The positive electrode is prepared by a method in which the positive electrode active material is co-blended with a conductive agent and a binder in a solvent, and the resulting mixture is coated on the current collector after blending homogeneously and then dried to form the positive electrode plate. The positive electrode active material used herein is graphene-modified lithium iron phosphate material. The conductive agent may be conductive carbon material such as conductive carbon black, Super P, and the current collector is aluminum foil.

The negative electrode is prepared by a method in which the negative electrode active material is co-blended with a binder in a solvent, and the resulting mixture is coated on a current collector after blending homogeneously and then dried to form the negative electrode plate. The negative electrode active material may be metallic lithium; carbon material, such as graphite, pyrolytic carbon, coke, carbon fibers or high-temperature sintered organic polymers, etc.; a material that may form an alloy with lithium, including metal elements (e.g. Mg, B, Al, Ga, In, Si, Sn, Pb, Sb, Bi, Cd, Ag, Zn, Hf, Zr, Y, etc.), alloys containing Si or Sn (e.g. SiB₄, SiB₆, Mg₂Si, Mg₂Sn, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂ or ZnSi₂, etc.); and other active materials such as SiC, Si₃N₄, Si₂N₂O, Ge₂N₂O, SiOₓ (0<x≤2) , SnOₓ (0<x≤2) , LiSiO or LiSnO, etc.. The current collector is aluminum foil or nickel foil.

The separator is located between the positive and negative electrode plates, and is a class of porous thin polymer films, such as microporous polypropylene thin film, etc.. The non-aqueous electrolyte solution is composed of a non-aqueous solvent and an electrolyte. The non-aqueous solvent is one of dimethyl carbonate, dipropyl carbonate, propylene carbonate, ethylene carbonate, butylene carbonate, γ-butyrolactone, sulfolane, methylsulfolane, 1,2-dimethoxylethane, 1,2-diethoxylethane, tetrahydrofuran, 2-methyltetrahydrofuran, methylpropanoic acid, methylbutanoic acid, acetonitrile, propionitrile, phenyl methyl ether, acetates, lactates and propionates or a mixture thereof. The electrolyte is a salt containing lithium, such as LiCl, LiBr, LiPF₆, LiClO₄, LiAsF₆, LiBF₄, LiCH₃SO₃, LiCF₃SO₃, LiN(CF₃SO₂)₂ or LiB(C₆H₅)₄, etc..

The advantages of the invention lie in the following facts. Graphene is a new material rapidly emerging in recent years. Its structure may be interpreted as a single layer of graphite. Thus, it has excellent electric conductivity, and exhibits good lithium-ion conductivity too. The peculiar two-dimension lamellar nano-structure and tremendous specific surface area of graphene imparts it with more remarkable advantages over nanoparticles or nanowires and the like, when used as additive material for modification. Therefore, graphene-modified lithium iron phosphate is expected to surpass carbon coating, conductive polymer doping and other conventional means to realize a jump of lithium-ion cell performance. It has been revealed that graphene-modified lithium iron phosphate positive electrode active material exhibits prominent rate capacity and high cycle stability. The discharge capacity of this material is about 85% of the formation capacity at 10C rate, and that at 50C rate is still 70% of the formation capacity. No obvious decline of the capacity is yet observed after 1000 cycles of charge and discharge at large current of 50C for charge and 50C for discharge.

### Description of the Drawings

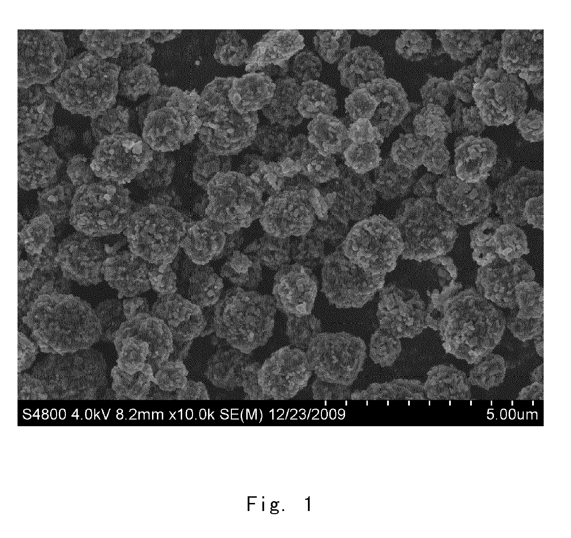

Fig. 1 is a SEM image of a graphene-modified lithium iron phosphate positive electrode active material;

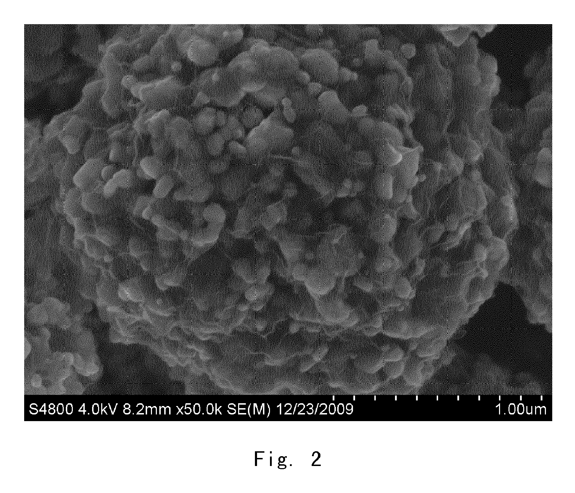

Fig. 2 is a highly magnified SEM image of a graphene-modified lithium iron phosphate positive electrode active material;

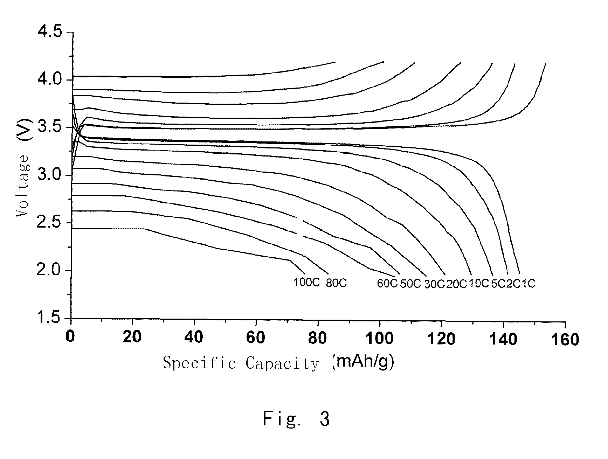

Fig. 3 shows charge/discharge curves at various rates for a lithium-ion cell that uses graphene-modified lithium iron phosphate as its positive electrode material;

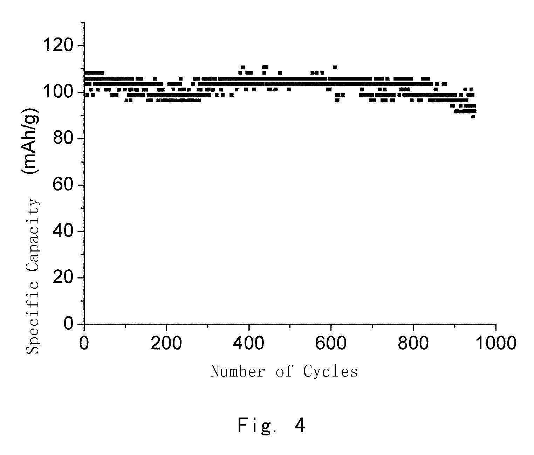

Fig. 4 shows the cycling performance of a lithium-ion cell that uses graphene-modified lithium iron phosphate as its positive electrode material, wherein the cell is charged and discharged at a high rate of 50C.

### Detailed Description of the Invention

### Step 1: Preparation of Graphene

Graphite is placed in a strong oxidant and agitated under heating for 2-8 hours to obtain graphite oxide. The mixture is washed with water to pH=4-5, and single-layer exfoliation of the graphite oxide is effected by means of agitation, shaking, ultrasonication, etc. to obtain graphene oxide. Subsequently, graphene is obtained by reducing the graphene oxide. The strong oxidant may be a mixture system of potassium permanganate, concentrated sulfuric acid and potassium nitrate, or a mixture system of fuming nitric acid and sodium chlorate (or potassium chlorate), or a mixture system of fuming nitric acid, concentrated sulfuric acid and sodium chlorate (or potassium chlorate). Reduction may be fulfilled in water phase using a strong water-soluble reductant (e.g. hydrazine hydrate, sodium borohydride, etc.), or by a process of high temperature calcination.

### Step 2: Preparation of Lithium Iron Phosphate

Preparation by solid phase process: stoichiometric solid powder precursors containing lithium, iron and phosphor are mixed homogeneously and subjected to solid phase reaction at high temperature to obtain solid powder of lithium iron phosphate.

Preparation by liquid phase process: inorganic precursors containing lithium, iron and phosphor are dissolved in a solvent, and subjected to solution phase reaction to obtain lithium iron phosphate or lithium iron phosphate precursor, followed by high temperature annealing to obtain final lithium iron phosphate material.

### Step 3: Preparation of Graphene-modified Lithium Iron Phosphate

A mixed dispersion system of graphene (graphene oxdie)/lithium iron phosphate in certain proportion is prepared in an aqueous system, and these two components are mixed homogeneously by means of agitation and ultrasonication, etc.. A composite solid material of graphene (graphene oxide) and lithium iron phosphate is obtained after drying. Finally, a powder material of graphene-modified lithium iron phosphate is obtained by annealing treatment at 400-700°C. The drying means is one of common heat drying, spray drying and vacuum suction filtration drying.

### Step 4. Making of Lithium-ion Secondary Cell Using Graphene-modified Lithium Iron Phosphate as Positive Electrode Material

The lithium-ion secondary cell is made via a conventional process route. The cell is composed of a positive electrode plate, a negative electrode plate, a separator and a non-aqueous electrolyte solution.

The positive electrode is prepared by a method in which a positive electrode active material is co-blended with a conductive agent and a binder in a solvent, and the resulting mixture is coated on a current collector after blending homogeneously and then dried to form the positive electrode plate. The positive electrode active material used herein is graphene-modified lithium iron phosphate material. The conductive agent may be conductive carbon material such as conductive carbon black, Super P, and the current collector is aluminum foil.

The negative electrode is prepared by a method in which a negative electrode active material is co-blended with a binder in a solvent, and the resulting mixture is coated on a current collector after blending homogeneously and then dried to form the negative electrode plate. The negative electrode active material may be metallic lithium; carbon material, such as graphite, pyrolytic carbon, coke, carbon fibers or high-temperature sintered organic polymers, etc.; a material that may form an alloy with lithium, including metal elements (e.g. Mg, B, Al, Ga, In, Si, Sn, Pb, Sb, Bi, Cd, Ag, Zn, Hf, Zr, Y, etc.), alloys containing Si or Sn (e.g. SiB₄, SiB₆, Mg₂Si, M₉₂Sn, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂ or ZnSi₂, etc.); and other active materials such as SiC, Si₃N₄, Si₂N₂O, Ge₂N₂O, SiOₓ (0<x≤2), SnOₓ (0<x≤2), LiSiO or LiSnO, etc.. The current collector is aluminum foil or nickel foil.

The separator is located between the positive and negative electrode plates, and is a class of porous thin polymer films, such as microporous polypropylene thin film, etc.. The non-aqueous electrolyte solution is composed of a non-aqueous solvent and an electrolyte. The non-aqueous solvent is one of dimethyl carbonate, dipropyl carbonate, propylene carbonate, ethylene carbonate, butylene carbonate, γ-butyrolactone, sulfolane, methylsulfolane, 1,2-dimethoxylethane, 1,2-diethoxylethane, tetrahydrofuran, 2-methyltetrahydrofuran, methylpropanoic acid, methylbutanoic acid, acetonitrile, propionitrile, phenyl methyl ether, acetates, lactates and propionates or a mixture thereof. The electrolyte is a salt containing lithium, such as LiCl, LiBr, LiPF₆, LiClO₄, LiAsF₆, LiBF₄, LiCH₃SO₃, LiCF₃SO₃, LiN(CF₃SO₂)₂ or LiB(C₆H₅)₄, etc..

### Example 1

In the first step, 1.2g potassium nitrate was weighed and added into 46ml concentrated sulfuric acid (96-98wt.%), and then 1.0g graphite was added. After mixing homogeneously, 6.0g potassium permanganate was added slowly under agitation. Subsequently, the system was heated to 40°C, and agitation was continued for 6 hours. Then 80ml water was added dropwise slowly. Meanwhile, the temperature of the system was raised to 70°C, and agitation was kept for 30 minutes. 200ml water and 6ml hydrogen peroxide (30%) were added, and agitation was stopped after 5 minutes. After the graphite oxide particles settled down, the supernatant was removed. This as-prepared product was washed several times with water until pH of the system reached 5 to obtain a mother liquor of the pure graphite oxide. The mother liquor of the graphite oxide was ultrasonicated for 2 hours to obtain a sol of the single-layer exfoliated graphene oxide.

In the second step, a stoichiometric amount of a ferrous salt (e.g. ferrous sulfate, ferrous oxalate or ferrous chloride, etc.), an inorganic compound containing lithium (e.g. lithium hydroxide, or lithium carbonate, etc.) and an inorganic compound containing phosphor (e,g. phosphoric acid, or ammonium dihydrogen phosphate, etc.) was dissolved in water at room temperature, and formulated into a precursor solution or sol in the presence of an amount of organic auxiliary (e.g. ethylene glycol). This mixture system was treated at 150-220°C for 2-10 hours in a closed vessel, followed by filtration and water washing to obtain lithium iron phosphate.

In the third step, the lithium iron phosphate was added into the solution of the graphene oxide, wherein the content of the lithium iron phosphate was 5mg/mL, and the mass ratio of the lithium iron phosphate to the graphene oxide was 15/1. After mixing homogeneously by agitation and ultrasonication, this mixture system was dried by means of spray drying to obtain a solid powder. This powder was subjected to annealing treatment at 600°C for 5 hours under the protection of argon, and a graphene-modified lithium iron phosphate positive electrode material was obtained.

In the fourth step, the graphene-modified lithium iron phosphate positive electrode active material was mixed homogeneously in N-methyl pyrrolidone with a conductive agent, Super P, and a binder, polyvinylidene fluoride in a proportion of 80:15:5 by mass, coated on an aluminum foil and dried at 80°C to obtain a positive electrode plate. Subsequently, this positive electrode plate was assembled with a lithium plate as the negative electrode, microporous polypropylene thin film as the separator, and 1 mol/L non-aclueous solution of LiPF₄ (the solvent being a mixture of equivalent volumes of dimethyl carbonate and dipropyl carbonate) as the electrolyte solution to prepare a lithium-ion secondary cell.

### Example 2

The first step was carried out in the same way as that in Example 1 to obtain a graphene oxide sol.

In the second step, a stoichiometric amount of a ferrous salt (e.g. ferrous oxalate), a lithium salt (e.g. lithium chloride) and a phosphor source (e.g. ammonium dihydrogen phosphate) was dissolved in water, and agitated at room temperature to form a homogeneous sol which was aged at raised temperature to obtain a gel. After drying, annealing treatment at high temperature (400-700 °C) was carried out under the protection of argon for 4-20 hours to obtain a lithium iron phosphate material.

The subsequent steps were the same as the third and fourth steps in Example 1.

### Example 3

The first step was carried out in the same way as that in Example 1 to obtain a graphene oxide sol.

In the second step, an iron source (e.g. ferrous oxalate, ferrous acetate, ferric oxide or ferric nitrate, etc.) was mixed stoichiometrically with a phosphor source (e.g. lithium dihydrogen phosphate, ammonium dihydrogen phosphate, or diammonium hydrogen phosphate, etc.) and a lithium source (e.g. lithium dihydrogen phosphate, lithium carbonate, lithium acetate, lithium nitrate, or lithium hydroxide, etc.), and ball milled to obtain a powder of reactant precursor. Annealing treatment at 400-700 °C was carried out under the protection of argon for 4-20 hours, and the product was ball milled at high speed to obtain a lithium iron phosphate powder.

The subsequent steps were the same as the third and fourth steps in Example 1.

### Example 4

The preparation method in this example was the same as that in Example 1 except that the mass ratio of lithium iron phosphate to graphene oxide in the third step was 10/1.

### Example 5

The preparation method in this example was the same as that in Example 1 except that the mass ratio of lithium iron phosphate to graphene oxide in the third step was 5/1.

### Example 6

The preparation method in this example was the same as that in Example 1 except that the annealing temperature for the solid powder in the third step was 500 °C.

### Example 7

The preparation method in this example was the same as that in Example 1 except that the annealing temperature for the solid powder in the third step was 700 °C.

### Example 8

The preparation method in this example was the same as that in Example 1 except that in the fourth step, graphite was used as a negative electrode active material, coated on a copper foil after mixed homogeneously with polyvinylidene fluoride, and dried at 80°C to form a negative electrode plate for the cell.

### Example 9

The first step was carried out in the same way as that in Example 1 to obtain a graphene oxide sol.

In the second step, hydrazine hydrate was used as a reductant to reduce graphene oxide in the presence of a water-soluble non-ionic surfactant (e.g. polyoxyethylene lauryl ether, Tween 80 or Triton X100, etc., the mass ratio of the surfactant to the graphene oxide was 2/1) as a stabilizer to a graphene sol. The mass ratio of the reductant to the graphene oxide was 0.5:1-3:1, and the reducing temperature was 70-90 °C.

In the third step, a stoichiometric amount of a ferrous salt (e.g. ferrous sulfate, ferrous oxalate or ferrous chloride, etc.), an inorganic compound containing lithium (e.g. lithium hydroxide, or lithium carbonate, etc.) and an inorganic compound containing phosphor (e.g. phosphoric acid, or ammonium dihydrogen phosphate, etc.) was dissolved in water at room temperature, and formulated into a precursor solution or sol in the presence of an amount of organic auxiliary (e.g. ethylene glycol). This mixture system was treated at 150-220°C for 2-10 hours in a closed vessel, followed by filtration and water washing to obtain lithium iron phosphate.

In the fourth step, the lithium iron phosphate was added into the solution of the graphene, wherein the content of the lithium iron phosphate was 5mg/mL, and the mass ratio of the lithium iron phosphate to the graphene oxide was 15/1. After mixing homogeneously by agitation and ultrasonication, this mixture system was dried by means of spray drying to obtain a solid powder. This powder was subjected to annealing treatment at 600°C for 5 hours under the protection of argon, and a graphene-modified lithium iron phosphate positive electrode material was obtained.

In the fifth step, the graphene-modified lithium iron phosphate positive electrode active material was mixed homogeneously in N-methyl pyrrolidone with a conductive agent, Super P, and a binder, polyvinylidene fluoride in a proportion of 80:15:5 by mass, coated on an aluminum foil and dried at 80°C to obtain a positive electrode plate. Subsequently, this positive electrode plate was assembled with a lithium plate as the negative electrode, microporous thin polypropylene film as the separator, and 1mol/L non-aqueous solution of LiPF₄ (the solvent being a mixture of equivalent volumes of dimethyl carbonate and dipropyl carbonate) as the electrolyte solution to prepare a lithium-ion secondary cell.

### Example 10

The first and second steps were carried out in the same way as those in Example 9.

In the third step, a stoichiometric amount of a ferrous salt (e.g. ferrous oxalate), a lithium salt (e.g. lithium chloride) and a phosphor source (e.g. ammonium dihydrogen phosphate) was dissolved in water, and agitated at room temperature to form a homogeneous sol which was aged at raised temperature to obtain a gel. After drying, annealing treatment at high temperature (400-700°C) was carried out under the protection of argon for 4-20 hours to obtain a lithium iron phosphate material.

The subsequent steps were the same as the fourth and fifth steps in Example 9.

### Example 11

The first and second steps were carried out in the same way as those in

### Example 9.

In the third step, an iron source (e.g. ferrous oxalate, ferrous acetate, ferric oxide or ferric nitrate, etc.) was mixed stoichiometrically with a phosphor source (e.g. lithium dihydrogen phosphate, ammonium dihydrogen phosphate, or diammonium hydrogen phosphate, etc.) and a lithium source (e.g. lithium dihydrogen phosphate, lithium carbonate, lithium acetate, lithium nitrate, or lithium hydroxide, etc.), and ball milled to obtain a powder of reactant precursor. Annealing treatment at 400-700 °C was carried out under the protection of argon for 4-20 hours, and the product was ball milled at high speed to obtain a lithium iron phosphate powder.

The subsequent steps were the same as the fourth and fifth steps in Example 9.

### Example 12

The preparation method in this example was the same as that in Example 9 except that the mass ratio of lithium iron phosphate to graphene oxide in the third step was 30/1.

### Example 13

The preparation method in this example was the same as that in Example 9 except that the mass ratio of lithium iron phosphate to graphene oxide in the third step was 10/1.

### Example 14

The preparation method in this example was the same as that in Example 9 except that the annealing temperature for the solid powder in the third step was 500 °C.

### Example 15

The preparation method in this example was the same as that in Example 9 except that the annealing temperature for the solid powder in the third step was 700 °C.

### Example 16

The preparation method in this example was the same as that in Example 9 except that in the fourth step, graphite was used as a negative electrode active material, coated on a copper foil after mixed homogeneously with polyvinylidene fluoride, and dried at 80°C to form a negative electrode plate for the cell.

### Example 17

The first step was carried out in the same way as that in Example 1 to obtain a graphene oxide sol.

In the second step, the graphene oxide sol was spray dried to obtain a solid powder of graphene oxide, and this powder was subjected to annealing treatment at 1000°C for 30 seconds under the protection of argon to obtain a reduced graphene powder.

The subsequent steps were the same as the second, third and fourth steps in Example 9.

### Example 18

The preparation method in this example was the same as that in Example 1 except that in the third step, the mixture system of graphene and lithium iron phosphate was heated at 80°C to remove moisture to obtain a dry mixture product which was then ball milled and annealed to obtain a graphene-modified lithium iron phosphate positive electrode active material.

### Example 19

The preparation method in this example was the same as that in Example 1 except that in the third step, the mixture system of graphene and lithium iron phosphate was subjected to vacuum suction filtration to remove moisture, and the residual moisture was dried at 80°C, followed by ball milling and annealing to obtain a graphene-modified lithium iron phosphate positive electrode active material.

### Example 20

In the first step, 1.0g graphite and 8.5g sodium chloride were added into 6mL fuming nitric acid, and agitated at 60°C for 24 hours. Subsequently, the resulting mixture was filtered and washed with water. After drying, the above oxidation step was repeated three times. The resulting graphite oxide was agitated and ultrasonicated in a solution for 2 hours to obtain a graphene oxide solution.

The subsequent steps were the same as the second to fourth steps in Example 1.

### Example 21

In the first step, 18mL concentrated sulfuric acid and 9mL fuming nitric acid were mixed in an ice-water bath. 1.0g graphite was added, and then 11g potassium chlorate was added slowly under agitation. After 6 hours of agitation, 1L water was added, followed by filtration, washing and drying. The resulting graphite oxide was agitated and ultrasonicated in a solution for 2 hours to obtain a graphene oxide solution.

The subsequent steps were the same as the second to fourth steps in Example 1.

The graphene-modified lithium iron phosphate positive electrode active material provided herein has been significantly improved with respect to high rate charge/discharge and cycle stability when compared with conventional carbon-coated lithium iron phosphate material. In the above examples, the lithium-ion cell using the graphene-modified lithium iron phosphate as its positive electrode active material still keeps 70% of its capacity at a high charge/discharge rate of 50C, and the capacity exhibits no obvious decline after 1000 cycles.

## Claims

1. A graphene-modified lithium iron phosphate positive electrode active material, wherein the positive electrode active material is a graphene-modified lithium iron phosphate material, wherein the mass ratio of graphene to lithium iron phosphate is 1/30-1/10.

2. A preparation method for a graphene-modified lithium iron phosphate positive electrode active material, wherein it comprises the following steps: dispersing graphene or graphene oxide and lithium iron phosphate in an aqueous solution to form a mixture, wherein the content of lithium iron phosphate in the aqueous solution is 2-50g/L; mixing the resulting mixture with agitating time of 0.5-2 hours and ultrasonication time of 0.5-2 hours to make it homogeneous; subsequently drying to obtain lithium iron phosphate material compounded with graphene or graphene oxide; and annealing at high-temperature to obtain finally the graphene-modified lithium iron phosphate positive electrode active material, wherein the mass ratio of graphene to lithium iron phosphate is 1/30-1/10, and that of graphene oxide to lithium iron phosphate is 1/15-1/5.

3. The preparation method of Claim 2, wherein the graphene is prepared by solution phase chemistry and comprises the following steps: graphite is oxidized by a strong oxidant, and the product as obtained is ultrasonicated to provide graphene oxide which is then reduced by a strong reductant in solution phase or by high temperature annealing to obtain graphene.

4. The preparation method Of Claim 3, wherein the strong oxidant is a mixture system of potassium permanganate, concentrated sulfuric acid (concentration: 96-98wt%) and potassium nitrate, or a mixture system of fuming nitric acid and sodium chlorate (or potassium chlorate), or a mixture system of fuming nitric acid, concentrated sulfuric acid (concentration: 96-98wt%) and sodium chlorate (or potassium chlorate); and the reductant is hydrazine hydrate or sodium borohydride, wherein the mass ratio of the reductant to the graphene oxide is 0.5:1-3:1, and the reduction temperature is 70-90 °C; and
wherein the mass ratio of graphite to the strong oxidant is graphite : potassium permanganate : concentrated sulfuric acid : potassium nitrate =1: 2-10:20-100 :1-3; or graphite : fuming nitric acid : sodium chlorate (or potassium chlorate) =1: 3-10:5-20; or graphite : concentrated sulfuric acid : fuming nitric acid : sodium chlorate (or potassium chlorate) = 1: 20-50:5-20:5-20.

5. The preparation method of Claim 2, wherein the drying means is one of spray drying, vacuum suction filtration drying or direct heat drying, wherein vacuum suction filtration drying or direct heat drying is followed by ball milling to pulverize the product.

6. The preparation method of Claim 2, wherein the temperature for the high-temperature annealing is 400-700°C, and the annealing time is 2-12 hours.

7. A high-performance lithium-ion secondary cell, comprising a positive electrode plate, a negative electrode plate, a separator between the positive electrode plate and the negative electrode plate, and a non-aqueous electrolyte solution, wherein the positive electrode plate is composed of a layer of positive electrode active material coated on a positive current collector, wherein the positive electrode active material is grapheme-modified lithium iron phosphate material, wherein the mass ratio of graphene to lithium iron phosphate is 1/30-1/10.

8. The lithium-ion secondary cell of Claim 7, wherein the negative electrode active material for the negative electrode plate is metallic lithium, carbon material, a material that may form an alloy with lithium, wherein the carbon material is graphite, pyrolytic carbon, coke, carbon fibers or high-temperature sintered organic polymers.

9. The lithium-ion secondary cell of Claim 8 wherein the material that may form an alloy with lithium includes Mg, B, Al, Ga, In, Si, Sn, Pb, Sb, Bi, Cd, Ag, Zn, Hf, Zr or Y; alloys containing Si or Sn including SiB₄, SiB₆, Mg₂Si, Mg₂Sn, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂ or ZnSi₂; and other active materials including SiC, Si₃N₄, Si₂N₂O, Ge₂N₂O, SiOₓ, SnOₓ, 0<x≤2, LiSiO or LiSnO.

10. The lithium-ion secondary cell of Claim 7, wherein the non-aqueous electrolyte solution is composed of a non-aqueous solvent and an electrolyte, wherein the non-aqueous solvent is one of dimethyl carbonate, dipropyl carbonate, propylene carbonate, ethylene carbonate, butylene carbonate, γ-butyrolactone, sulfolane, methylsulfolane, 1,2-dimethoxylethane, 1,2-diethoxylethane, tetrahydrofuran, 2-methyltetrahydrofuran, methylpropanoic acid, methylbutanoic acid, acetonitrile, propionitrile, phenyl methyl ether, acetates, lactates and propionates or a mixture thereof; and the electrolyte is a salt containing lithium, such as LiCl, LiBr, LiPF₆, LiClO₄, LiAsF₆, LiBF₄, LiCH₃SO₃, LiCF₃SO₃, LiN(CF₃SO₂)₂ or LiB(C₆H₅)₄.
